# FASCICULE DE BREVET EUROPEEN

(11) **EP 4 204 266 B1**
(45) Date de publication et mention de la délivrance du brevet: **08.10.2025**
(21) Numéro de dépôt: 21766629.6
(22) Date de dépôt: 24.08.2021
(51) Int. Cl.: B60W 30/095, B60W 30/12, B60W 50/14, B60W 30/09

(54) **MÉTHODE DE CONTRÔLE POUR CONTRÔLER LE MOUVEMENT LATÉRAL D'UN VÉHICULE AUTOMOBILE**
STEUERUNGSVERFAHREN ZUR STEUERUNG DER SEITLICHEN BEWEGUNG EINES KRAFTFAHRZEUGS
CONTROL METHOD FOR CONTROLLING THE LATERAL MOVEMENT OF A MOTOR VEHICLE

(30) Priorité: 26.08.2020 FR 2008715
(43) Date de publication de la demande: 05.07.2023
(73) Titulaire: Ampere SAS, 92100 Boulogne-Billancourt (FR)
(72) Inventeur: GONZALEZ BAUTISTA, David, 78210 Saint Cyr l'école (FR); MILANES, Vicente, 92100 Boulogne-Billancourt (FR); NAVAS MATOS, Francisco Martin, 75013 PARIS (FR)
(74) Mandataire: Renault Group
(86) Numéro de dépôt international: PCT/EP2021/073408
(87) Numéro de publication internationale: WO 2022/043331

(56) Documents cités:
- EP-A1- 1 884 449
- EP-A1- 2 978 648
- US-A1- 2015 134 218

## Description

### Domaine technique

La présente invention concerne une méthode de contrôle pour contrôler le mouvement latéral d'un véhicule automobile, un système de contrôle pour contrôler ledit mouvement latéral, un produit programme d'ordinateur comportant des instructions de programme exploitables par ledit système de contrôle et un véhicule automobile autonome ou semi-autonome comportant ledit système de contrôle.

### Technique antérieure

Ces dernières années, les progrès réalisés dans l'équipement des véhicules automobiles en système d'assistance au conducteur ont contribué à une amélioration significative de la sécurité routière. Le défi du futur est de concevoir des véhicules automobiles autonomes. Un véhicule automobile autonome est un véhicule automobile adapté pour rouler sur une route ouverte sans ou avec peu d'intervention d'un conducteur. Le concept vise à développer et à produire un véhicule pouvant à terme circuler en toute sécurité sur une voie publique et ceci quel que soit le trafic généré par d'autres véhicules ou des obstacles (humain, animal, arbre...) présents sur la voie. La notion de véhicule automobile autonome couvre ici un véhicule automobile totalement autonome dans lequel l'intervention d'un opérateur humain n'est pas nécessaire pour la conduite dudit véhicule. Cette notion couvre également un véhicule automobile dit « semi-autonome » disposant de systèmes automatisés d'aide à la conduite mais dans lequel l'intervention de l'opérateur humain reste globalement importante.

Le fonctionnement d'un véhicule automobile autonome est généralement régi conjointement par un dispositif de navigation embarqué et par un dispositif de définition d'une trajectoire prédéterminée. Le dispositif de navigation embarqué est conçu pour programmer un itinéraire à grande échelle, c'est-à-dire à l'échelle d'un réseau routier. Cet itinéraire comprend une série de segments de route consécutifs adaptés pour relier une position d'origine à une destination. Cette série de segments de route est éventuellement variable dynamiquement en fonction des conditions de circulation détectées ou des contraintes de déplacement prédéfinies du réseau routier (fermeture de certains tronçons pour travaux en cours, par exemple). Le dispositif de définition de trajectoire prédéterminée est conçu pour traiter automatiquement des trajectoires de déplacement de véhicules à l'échelle locale, de l'ordre de plusieurs dizaines ou centaines de mètres. Ce dispositif de définition de trajectoire prédéterminée est adapté pour mettre en œuvre l'itinéraire programmé par le système de navigation. Cette mise en œuvre est réalisée en déterminant la position, la direction et la vitesse du véhicule au fil du temps en fonction des contraintes de mouvement, telles que des contraintes dynamiques du véhicule automobile (vitesse maximale, accélération longitudinale, angle de braquage, etc...), des contraintes environnementales (obstacles sur la route, etc...) ou des contraintes d'optimisation (minimisation de l'accélération latérale du véhicule automobile, par exemple).

Dans un contexte de conduite autonome, un véhicule automobile est agencé pour suivre un itinéraire urbain ou extra-urbain prédéfini en parcourant une série de tronçons de route déterminée par le dispositif de navigation embarqué. La trajectoire prédéterminée est définie par un ensemble de coordonnées cartésiennes variables dans le temps et calculées en temps réel en fonction du tronçon de route à travers lequel l'itinéraire prédéfini est atteint et de paramètres environnementaux. La mise en œuvre de ce calcul peut se faire à l'aide d'un dispositif de reconnaissance de marquages routiers, des moyens de détection radar ou laser, d'un dispositif de reconnaissance d'obstacles etc.... Au cours du roulage, le véhicule automobile suit une trajectoire réelle qui peut être différente de la trajectoire prédéterminée. En effet, au cours de ce roulage, le véhicule automobile subit un certain nombre de contraintes (pression des roues, dénivelé de la route, force du vent, etc...) qui peuvent ne pas été intégré par le dispositif de définition de la trajectoire prédéterminée. Dès lors, il peut exister un décalage latéral entre cette trajectoire réelle et la trajectoire prédéterminée qu'il convient de minimiser. Par décalage latéral, on entend une distance non nulle entre la trajectoire réelle et la trajectoire prédéterminée, mesurée sur un axe normal à ladite trajectoire prédéterminée. Il est possible de corriger ce décalage par une commande appropriée d'un système de contrôle latéral en vue de modifier l'angle de direction du véhicule automobile.

Le document US10026317 divulgue une méthode pour contrôler un véhicule automobile à partir d'une logique floue. Cette méthode comprend une étape de détermination d'une probabilité d'écart par rapport à une trajectoire déterminée, une position déterminée, une vitesse déterminée et une accélération déterminée d'un véhicule autonome. A partir de ces informations, un facteur de probabilité est calculé. Ce facteur indique la probabilité qu'une action effectuée par un conducteur a été effectuée pour amener le véhicule dans un état sûr. Cette probabilité permettra la transition entre un mode autonome, un mode semi-autonome, et un mode manuel dans lequel une action du conducteur est requise en raison d'un dysfonctionnement du véhicule automobile. Cette méthode utilisant la logique floue essaye de reproduire le comportement d'un être humain lorsque le véhicule automobile est dans un mode autonome. Cependant, ce véhicule peut prendre en charge différents types de passagers/conducteurs qui peuvent avoir des attentes variées lorsqu'ils sont embarqués dans le véhicule automobile. Ainsi, certains passagers peuvent être désireux d'une conduite souple et régulière alors que d'autres peuvent préférer une conduite beaucoup plus sportive. Il y a donc une diversité d'attente de la part des utilisateurs d'un véhicule autonome. En outre, la logique floue nécessite un temps d'apprentissage plus ou moins long qui rend plus complexe la mise en place de cette méthode de contrôle du véhicule automobile. Le document US2015/134218 décrit quant à lui une méthode pour contrôler latéralement un véhicule, mais qui pose également des inconvénients.

Il existe donc un besoin de proposer une méthode de contrôle pour contrôler le mouvement latéral d'un véhicule automobile, qui soit simple et pratique à mettre en œuvre et qui permet de tenir compte d'un plus grand nombre de paramètres pour la conduite automatique dudit véhicule automobile.

### Exposé de l'invention

La présente invention vise à remédier au moins en partie à ce besoin.

Plus particulièrement, la présente invention vise à améliorer l'expérience des passagers dans un véhicule autonome.

Un premier objet de l'invention concerne une méthode de contrôle pour contrôler le mouvement latéral d'un véhicule automobile, ledit véhicule automobile comprenant des moyens de direction pour suivre une trajectoire prédéterminée sur une route. La méthode de contrôle comprend une étape de détermination d'un décalage latéral dudit véhicule automobile par rapport à ladite trajectoire prédéterminée et une étape de détermination d'une commande pour la commande des moyens de direction du véhicule automobile. Ces moyens de direction sont adaptés pour modifier la direction dudit véhicule automobile de manière à corriger le décalage latéral. La méthode de contrôle comprend également une étape de sélection d'au moins un paramètre environnemental externe au véhicule automobile, ladite sélection dudit paramètre environnemental étant fonction d'un risque de collision avec ledit véhicule automobile. La commande des moyens de direction est déterminée selon ledit risque de collision et selon ledit décalage latéral du véhicule automobile.

Ainsi, il est tenu compte pour la commande des moyens de direction de paramètres internes du véhicule automobile mais également de paramètres environnementaux externes audit véhicule automobile. Il est alors possible d'intégrer à la décision de la commande un risque de collision et de piloter la correction du décalage latéral en conséquence. Par exemple, si le véhicule automobile est décalé vers un bord de la route, la présence d'un autre véhicule circulant en face sur la voie opposée de la route génère un faible risque de collision pour le véhicule automobile. Dès lors, il est possible de prévoir une correction lente du décalage latéral, c'est-à-dire sans changement brusque apporté dans la direction de déplacement du véhicule automobile. A contrario, si le véhicule automobile est décalé vers les marquages centraux de la route et qu'un autre véhicule automobile arrive en sens inverse le risque de collision est élevé, la réponse des moyens de direction devra donc être beaucoup plus dynamique pour éviter toute collision. L'invention permet ainsi de mieux adapter le contrôle du mouvement latéral du véhicule automobile en fonction des paramètres internes et externes dudit véhicule automobile tout en d'améliorant l'expérience des passagers.

Dans un mode de réalisation particulier, le paramètre environnemental est au moins un paramètre sélectionné dans la liste des paramètres suivants :
- un paramètre représentatif du trafic routier ;
- un paramètre représentatif d'un acteur mobile sur la route, tel qu'un être humain ou un animal ;
- un paramètre représentatif d'un obstacle immobile sur la route.

Selon l'invention la vitesse de correction du décalage latéral est adaptée en fonction du risque de collision et du décalage latéral.

Dans un autre mode de réalisation particulier, la correction du décalage latéral est ralentie si le risque de collision est faible au regard du décalage latéral du véhicule automobile. On rend ainsi la conduite automatique du véhicule automobile plus souple.

Dans un autre mode de réalisation particulier, la correction du décalage latéral est accélérée si le risque de collision est élevé au regard du décalage latéral du véhicule automobile. On améliore ainsi la sécurité dans la conduite automatique du véhicule automobile.

Dans un autre mode de réalisation particulier, un amortissement de la correction du décalage latéral est réalisé en fonction du risque de collision et du décalage latéral. On s'assure ainsi d'une bonne stabilité dans le temps du suivi par le véhicule automobile de la trajectoire déterminée.

Dans un autre mode de réalisation particulier, la méthode de contrôle comprend une étape d'information dans le véhicule automobile, ladite information concernant une situation de roulage dudit véhicule automobile. Cette étape d'information est réalisée à partir de moyens d'interface Homme-Machine. Ces moyens permettent notamment de prévenir un conducteur si celui-ci doit reprendre la commande du volant de direction, notamment lors d'un roulage dans un véhicule autonome.

Un autre objet de l'invention concerne un système de contrôle pour contrôler le mouvement latéral d'un véhicule automobile, ledit véhicule comprenant des moyens de direction pour suivre une trajectoire prédéterminée sur une route. Ce système de contrôle comprend des moyens de détermination d'un décalage latéral du véhicule automobile par rapport à la trajectoire prédéterminée, des moyens de détermination d'une commande pour la commande des moyens de direction du véhicule automobile, lesdits moyens de direction étant adaptés pour modifier la direction dudit véhicule automobile de manière à corriger ledit décalage latéral. Le système de contrôle comprend également des moyens de sélection d'au moins un paramètre environnemental externe au véhicule automobile, ladite sélection dudit paramètre environnemental étant fonction d'un risque de collision avec ledit véhicule automobile. La commande des moyens de direction est déterminée selon ledit risque de collision et selon ledit décalage latéral du véhicule automobile. Un amortissement de la correction du décalage latéral est réalisé en fonction du risque de collision et du décalage latéral.

Dans un mode de réalisation particulier, le système de contrôle comprend des moyens d'interface Homme-Machine pour informer un passager d'une situation de roulage dudit véhicule automobile.

Un autre objet de l'invention concerne un produit programme d'ordinateur comportant des instructions de programme exploitables par le système de contrôle précédent qui lorsqu'elles sont exécutées ou interprétées par ledit système de contrôle déclenchent la mise en œuvre de la méthode de contrôle précédente dans un véhicule automobile.

Un autre objet de l'invention concerne un véhicule automobile autonome comportant un système de contrôle selon un objet précédent.

La présente invention sera mieux comprise à la lecture de la description détaillée de modes de réalisation pris à titre d'exemples nullement limitatifs et illustrés par les dessins annexés sur lesquels :
**[****Fig 1****]** la figure 1 est une vue schématique illustrant un véhicule automobile autonome conforme à l'invention ;
**[****Fig 2****]** la figure 2 illustre le véhicule automobile autonome de la figure 1 en fonctionnement sur une route ;
**[****Fig 3****]** la figure 3 est un schéma illustrant un système de contrôle pour contrôler le mouvement latéral du véhicule automobile de la figure 1 sur la route de la figure 2 **;**
**[****Fig 4****]** la figure 4 est un schéma illustrant des moyens de détermination d'une commande pour la commande des moyens de direction du véhicule automobile de la figure 1, lesdits moyens de commande appartenant au système de contrôle de la figure 3.
**[****Fig 5****]** la figure 5 est un schéma illustrant différentes étapes d'une méthode de contrôle pour contrôler le mouvement latéral du véhicule automobile de la figure 1, ladite méthode de contrôle étant mise en œuvre par le système de contrôle de la figure 3.
**[****Fig 6****]** la figure 6 illustre des réponses du véhicule automobile 10 en fonction de différentes valeurs de distance latérale D_{L} en entrée ;
**[****Fig 7****]** la figure 7 illustre l'évolution dans le temps d'un angle de braquage appliqué par le système de contrôle de la figure 3 et l'évolution dans le temps d'un angle de braquage appliqué par un système de contrôle classique.
**[****Fig 8****]** la figure 8 illustre des évolutions superposées d'angles de braquage pilotés par le système de contrôle de la figure 3 et par un système de contrôle classique, dans le cas d'un risque de collision faible
**[****Fig 9****]** la figure 9 illustre des évolutions superposées d'angles de braquage pilotés par le système de contrôle de la figure 3 et par le système de contrôle classique, dans le cas d'un risque de collision élevé.

L'invention n'est pas limitée aux modes de réalisation et variantes présentées et d'autres modes de réalisation et variantes apparaîtront clairement à l'homme du métier selon les revendications annexées.

Sur les différentes figures, les éléments identiques ou similaires portent les mêmes références.

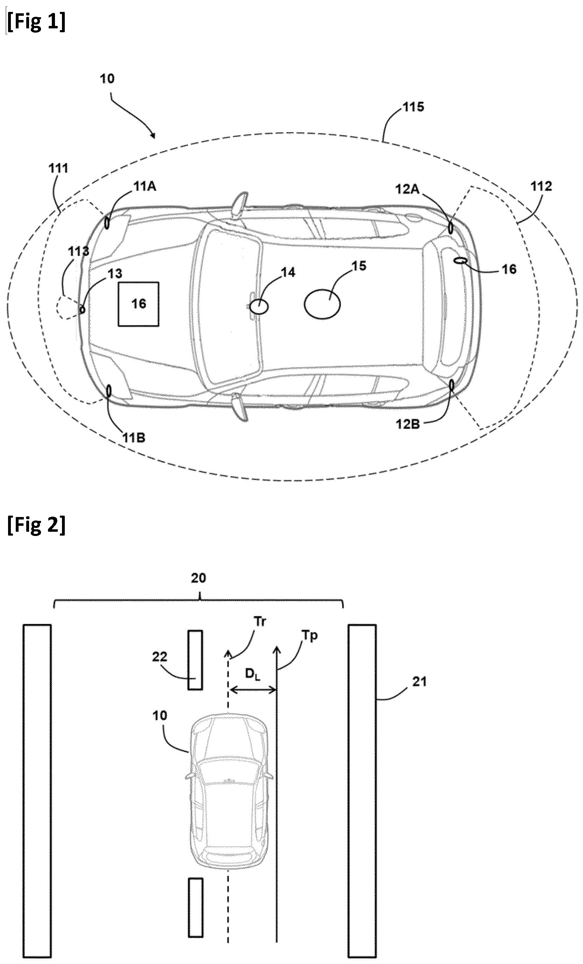

La figure 1 représente schématiquement une vue de dessus d'un véhicule automobile 10 conforme à la présente invention. Ce véhicule automobile 10 comprend une partie avant de véhicule, une partie arrière de véhicule, un toit de véhicule, un intérieur de véhicule, des moyens de direction (non représentés). Le véhicule automobile comprend également un châssis et un ou plusieurs panneaux de carrosserie montés ou fixés sur ledit châssis.

Le véhicule automobile 10 est ici un véhicule autonome. Par véhicule autonome, on entend un véhicule automobile totalement autonome ou semi-autonome. Il existe en effet plusieurs niveaux d'autonomie dans un véhicule automobile.

Dans un premier niveau, dit niveau 1, le véhicule automobile est responsable d'un nombre limité d'opérations de conduite associées audit véhicule automobile. Le conducteur reste alors responsable de la plupart des opérations de contrôle de conduite. Dans le niveau 1, les opérations de commande d'accélération et/ou de freinage (régulateur de vitesse, etc...) sont commandées par le véhicule automobile. Ce niveau 1 correspond à un niveau d'assistance à la conduite.

Dans un second niveau, dit niveau 2, le véhicule automobile est adapté pour collecter des informations (par exemple, via un ou plusieurs systèmes d'aide à la conduite, des capteurs, etc...) sur l'environnement externe (la route autour du véhicule automobile, la chaussée, le trafic routier, les conditions ambiantes). Dans ce niveau 2, le véhicule autonome est adapté pour utiliser les informations collectées afin de contrôler certaines opérations de conduite (par exemple, la direction, l'accélération, et/ou le freinage). Ce niveau 2 est un niveau d'automatisation partielle du véhicule automobile. Il convient de noter que pour le niveau 1 et le niveau 2, le conducteur doit conserver la pleine surveillance des opérations de conduite effectuées par le véhicule automobile autonome.

Dans un troisième niveau, dit niveau 3, le conducteur délègue toutes les opérations de conduite au véhicule automobile sauf lorsque ledit véhicule automobile demande au conducteur d'agir ou d'intervenir pour contrôler une ou plusieurs de ces opérations de conduite. Ce niveau 3 est un niveau d'automatisation conditionnelle.

Dans un quatrième niveau, dit niveau 4, le conducteur ne gère plus aucune opération de conduite. C'est le véhicule automobile qui contrôle alors l'ensemble de des opérations de conduite, y compris lorsque le conducteur ne répond pas à une demande d'intervention. Le niveau 4 est un niveau d'automatisation élevée.

Dans un cinquième niveau, dit niveau 5, le véhicule automobile contrôle toutes les opérations de conduite. Le véhicule automobile surveille ainsi au cours du roulage le trafic routier, les acteurs mobiles sur la route (êtres humains, animaux), les obstacles immobiles sur la route, la chaussée. A ce niveau 5, aucune interaction avec un conducteur humain n'est requise. Le niveau 5 est le niveau d'automatisation complète. Il convient de noter que pour les niveaux 3 à 5, le véhicule automobile est adapté pour surveiller les opérations de conduite ainsi que pour surveiller l'environnement externe audit véhicule automobile.

Pour pouvoir réaliser les différentes opérations de conduite dans ces différents niveaux d'autonomie, le véhicule automobile 10 comprend un certain nombre de capteurs tels que :
- un radar avant 11A, 11B ;
- un radar arrière 12A, 12B;
- un capteur ultrasons 13 ;
- une caméra vidéo 14 ;
- un LIDAR 15;
- une antenne GPS 16.

Le radar avant comprend deux éléments de radar avant 11A, 11B disposés sur la partie avant de véhicule de part et d'autre d'un axe de symétrie dudit véhicule automobile 10. Le radar avant possède une zone de détection 111 à l'avant du véhicule automobile. Il est ainsi adapté pour détecter les positions des objets environnants. Il permet de mesurer la vitesse du véhicule automobile. Les informations recueillies par le radar avant 11A, 11B sont particulièrement utiles pour mettre en œuvre certaines opérations de conduite telles que le freinage d'urgence ou l'anti-franchissement de bandes centrales.

Le radar arrière comprend deux éléments de radar arrière 12A, 12B disposés sur la partie arrière de véhicule de part et d'autre de l'axe de symétrie dudit véhicule automobile 10. Le radar arrière possède une zone de détection 112 à l'arrière du véhicule automobile. Il est ainsi adapté pour détecter les positions des objets environnants. Il permet de mesurer la vitesse des autres véhicules automobiles qui suivent ledit véhicule automobile 10. Les informations recueillies par le radar arrière 12A, 12B sont particulièrement utiles pour mettre en œuvre certaines opérations de conduite telles que le freinage d'urgence ou l'anti-franchissement de bandes centrales.

Le capteur ultrasons 13 est disposé sur la partie avant du véhicule entre les deux éléments de radar avant 11A, 11B. Le capteur ultrasons 13 possède une zone de détection 113 beaucoup plus faible que la zone de détection 111 du radar avant 11A, 11B. Ce capteur à ultrasons 13 est ainsi adapté pour détecter des obstacles très proches. Les informations recueillies sont particulièrement utiles pour mettre en œuvre des opérations de conduite telles que le maintien d'un écart de sécurité avec un autre véhicule automobile précédent directement ledit véhicule automobile 10.

La caméra vidéo 14 est située ici derrière le rétroviseur. Les informations recueillies par cette caméra vidéo 14 sont particulièrement utiles pour la mise en œuvre de certaines opérations de conduite telles que le déchiffrage des panneaux de signalisation, le repérage des bordures et des bandes centrales, la détection d'acteurs mobiles sur la route (êtres humains, animaux).

Le LIDAR 15 (pour « LIght Detection And Ranging » en anglais) est un capteur situé ici sur le toit du véhicule automobile 10. Il permet d'effectuer des mesures de télédétection par laser. La télédétection par laser est une technique de mesure à distance fondée sur l'analyse des propriétés d'un faisceau de lumière renvoyé vers son émetteur. Le LIDAR possède une zone de détection 115 assez large, par exemple de l'ordre de 50 mètres de diamètre. Il permet de scanner en permanence l'environnement à 360° pour en faire une cartographie en 3D. Les informations recueillies par le LIDAR 15 sont utiles pour la mise en œuvre de certaines opérations de conduite telles que la détection d'obstacles, y compris la nuit.

L'antenne GPS 16 est située sur la partie arrière du véhicule automobile 10. Elle permet de recevoir des signaux GPS (pour « Global Positioning System » en anglais). Les données de navigation peuvent alors être mises à jour dans le véhicule automobile 10 à partir de ces signaux GPS.

Le véhicule automobile comprend également un ordinateur central 16 adapté pour traiter les différentes données des capteurs 11A, 11B, 12A, 12B, 13, 14, 15. L'ordinateur central 16 et les capteurs 11A, 11B, 12A, 12B, 13, 14, 15 sont reliés dans le véhicule automobile par un ou plusieurs réseaux (non représentés) de type bus CAN (pour « Controller Area Network » en anglais) pour le transport desdites données des capteurs.

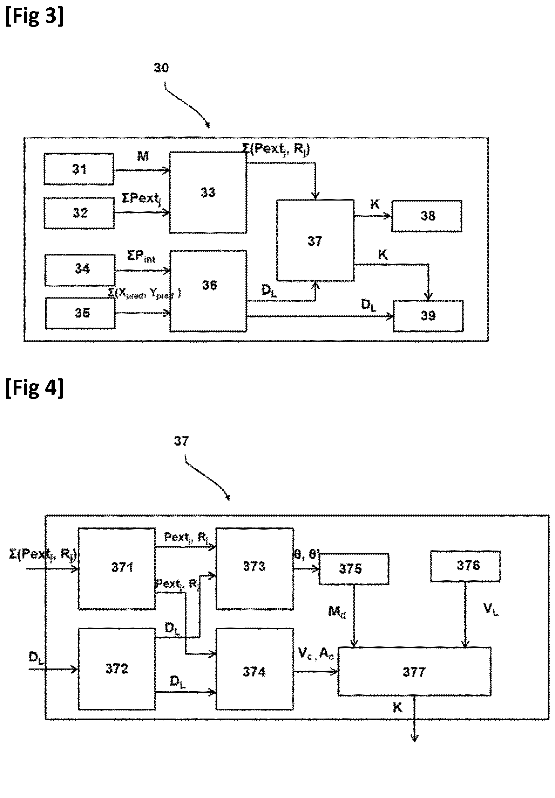

La figure 2 illustre le véhicule automobile autonome de la figure 1 sur une route 20. Afin de simplifier cette illustration, les capteurs 11A, 11B, 12A, 12B, 13, 14, 15 n'ont pas été représentés sur la figure 2. La route 20 est délimitée par deux bordures 21. Elle est de plus divisée en deux voies séparées par une pluralité de bandes centrales 22. Sur la figure 2, le véhicule roule sur la voie de droite en suivant une trajectoire réelle Tᵣ. Cette trajectoire réelle Tᵣ est ici décalée d'un décalage latéral D_{L} par rapport à une trajectoire prédéterminée Tₚ. La trajectoire prédéterminée Tₚ a été préalablement calculée par le système de navigation du véhicule automobile 10, notamment à partir des données des signaux GPS reçues par l'antenne GPS 16. Cette trajectoire prédéterminée Tₚ s'étend ici à mi-distance entre la bordure 21 et les bandes centrales 22. L'invention a pour but de minimiser le décalage latéral D_{L}. Pour cela, le véhicule automobile 10 comprend un système de contrôle adapté 30 illustré à la figure 3. Ce système de contrôle 30 est dans un mode de réalisation préférentiel intégré directement dans l'ordinateur central 16 du véhicule automobile.

La figure 3 illustre plus en détail le système de contrôle 30. Comme il a déjà été précisé, ce système de contrôle 30 est adapté pour contrôler le mouvement latéral du véhicule automobile 10. Il comprend :
- des moyens de génération d'une cartographie 31 ;
- de moyens de génération de paramètres environnementaux 32 ;
- un analyseur de risques de collision 33 ;
- des moyens de collecte de données internes 34 au véhicule automobile ;
- des moyens de génération d'une trajectoire prédéterminée 35 ;
- un calculateur d'erreur angulaire et d'erreur latérale 36, également appelé moyens de détermination d'un décalage latéral ;
- des moyens de détermination d'un comportement plan naturel « naturalistic planar behavior », en anglais) également appelé moyens de détermination d'une commande 37 pour la commande des moyens de direction du véhicule automobile 10 ;
- des moyens de contrôle 38 du décalage latéral ;
- des moyens d'interface Homme-Machine 39.

Les moyens de génération d'une cartographie 31 sont adaptés pour générer des informations concernant la route 20. Ces informations permettent de construire une ou plusieurs cartes numériques M comportant des données détaillées sur les bordures 21 de la route 20, les marquages centraux 22, les limites de l'itinéraire, les panneaux de signalisation, la pente de la route 20, la qualité de la chaussée (bitume, graviers, etc...). Les cartes numériques M sont, par exemple, construites à l'aide de la caméra vidéo 14. Celles-ci sont ensuite transmises à l'analyseur de risques de collision 33.

Les moyens de génération de paramètres environnementaux 32 sont adaptés pour aider à la représentation des acteurs mobiles sur la route tels que des êtres humains ou des animaux ainsi que des obstacles immobiles. Ces acteurs mobiles et ces obstacles immobiles sont représentés à l'aide d'un algorithme de fusion bas niveau qui combine des informations provenant d'une pluralité de caméras (par exemple, au moins 5 caméras) répartis sur le toit du véhicule pour capter des informations à 360 degrés. Ces caméras (non représentées sur la figure 1) sont principalement utilisées pour détecter lesdits acteurs mobiles et lesdits obstacles immobiles afin d'identifier leur classe c (mobile ou immobile, être humain ou animal, etc...). Ces informations sont ensuite combinées avec le LIDAR 15 qui va fournir une distance d par rapport au véhicule automobile 10 pour chaque acteur mobile et/ou pour chaque obstacle immobile. Les moyens de génération de paramètres environnementaux 32 comprennent une pluralité de boîtes 3D qui font référence au cadre global dans lequel se déplace le véhicule automobile 10, de sorte qu'il est possible de donner à chaque acteur mobile et à chaque obstacle immobile des coordonnées x, y déterminées dans la ou les cartes numériques M des moyens de génération d'une cartographie 31. Pour chaque acteur mobile et pour chaque obstacle immobile j, les moyens de génération de paramètres environnementaux 32 sont adaptés pour générer un paramètre environnemental Pextⱼ, avec j un entier naturel compris entre 0 et N. Chaque paramètre environnemental Pextⱼ comprend ainsi une information sur la classe cⱼ de l'acteur mobile ou de l'obstacle immobile, une information sur les coordonnées xⱼ, yⱼ de l'acteur mobile ou de l'obstacle immobile, une distance dⱼ de l'acteur mobile ou de l'obstacle immobile par rapport au véhicule automobile 10. L'ensemble des paramètres environnementaux Pextⱼ (cⱼ ; xⱼ, yⱼ ; dⱼ) sont ainsi transmis à l'analyseur de risques de collision 33.

Les cartes numériques M et les paramètres environnementaux Pextⱼ (cⱼ ; xⱼ, yⱼ ; dⱼ) fournissent une bonne vision de l'environnement dans lequel le véhicule automobile 10 est amené à se déplacer.

L'analyseur de risques de collision 33 est adapté pour recevoir les cartes numériques M et les paramètres environnementaux Pextⱼ. Plus particulièrement, l'analyseur de risques de collision 33 est apte à déterminer pour chaque paramètre environnemental Pextⱼ un risque Rⱼ associé. Pour cela, l'analyseur de risque est capable de prévoir en temps réel l'évolution des acteurs mobiles et/ou des obstacles immobiles sur la route. L'analyseur de risque va transmettre l'ensemble des paramètres Pextⱼ et leur risque Rⱼ associé aux moyens de détermination d'une commande 37.

Les moyens de collecte de données internes 34 au véhicule automobile sont adaptés pour collecter l'ensemble des paramètres internes Pᵢₙₜ du véhicule automobile 10. Ces paramètres sont déterminés à partir des différents capteurs embarqués. Ces paramètres internes Pᵢₙₜ concernent, notamment, l'angle de braquage, la vitesse du véhicule, l'accélération du véhicule, la vitesse angulaire de lacet du véhicule. Les paramètres internes Pᵢₙₜ comprennent également les coordonnées X et Y du centre de masse du véhicule automobile 10. Ces paramètres internes Pᵢₙₜ sont destinés à être transmis aux moyens de détermination d'un décalage latéral 36.

Les moyens de génération d'une trajectoire prédéterminée 35 sont adaptés pour fournir la trajectoire que le véhicule devra suivre à court terme. Cette trajectoire prédéterminée est fournie par le système de navigation. En variante, la trajectoire prédéterminée est obtenue à partir d'une caméra qui va scanner la bordure 21 de la voie sur laquelle roule le véhicule automobile 20 et les bandes centrales 22. Dans un mode de fonctionnement normal, cette trajectoire prédéterminée se trouve à mi-chemin entre cette bordure 21 et les bandes centrales 22. Les moyens de génération 35 vont alors fournir un ou plusieurs couples de coordonnées prédéterminées X_{pred}, Y_{pred} aux moyens de détermination d'un décalage latéral 36. Ces couples de coordonnées correspondent alors à une trajectoire prédéterminée Tₚ sur une certaine séquence de temps.

Les moyens de détermination d'un décalage latéral 36 sont adaptés pour déterminer un décalage latéral D_{L} entre la trajectoire prédéterminée Tₚ et la trajectoire réelle Tᵣ du véhicule automobile. Pour cela, le calculateur 36 compare les coordonnées X,Y du centre de masse du véhicule automobile 10 avec les coordonnées prédéterminées X_{pred}, Y_{pred}. C'est une approche ici à deux dimensions. Les moyens 36 transmettent ensuite le décalage latéral D_{L} aux moyens de détermination d'une commande 37 et aux moyens d'interface Homme-Machine 39.

Les moyens de détermination d'une commande 37 sont adaptés pour recevoir les paramètres environnementaux Pextⱼ et leur risque associé Rⱼ ainsi que le décalage latéral D_{L}. A partir de ces informations, les moyens de détermination 37 génèrent une commande K pour la commande des moyens de direction du véhicule automobile, de manière à corriger le décalage latéral D_{L}. Cette commande K est ensuite transmise aux moyens de contrôle 38 du décalage latéral ainsi qu'aux moyens d'interface Homme-Machine 39.

A partir du décalage latéral D_{L} reçu, les moyens de contrôle 38 du décalage latéral vont agir sur des moyens de direction (non représentés). Ces moyens de direction vont modifier l'angle de direction du véhicule automobile 10 de manière à diminuer le décalage latéral D_{L}. De manière connue, ces moyens de direction peuvent comprendre une colonne de direction, un boîtier de direction, une crémaillère, des biellettes, des porte-fusées.

Les moyens d'interface Homme-Machine 39 sont adaptés pour recevoir une information sur le décalage latéral D_{L} ainsi qu'une information sur la commande K. A partir de ces informations, les moyens d'interface 39 peuvent prévenir le conducteur d'une situation non conforme. Une telle situation non conforme se produit lorsque le décalage latéral D_{L} reçu par les moyens d'interface Homme-Machine 39 est supérieur à une certaine valeur de référence. Dans un mode de réalisation alternatif, une telle situation non conforme se produit également lorsque la commande K demande une action très rapide au niveau des moyens de direction pour diminuer le décalage latéral D_{L}. Dès lors, le conducteur a la possibilité de prendre le contrôle du véhicule pour empêcher tout risque d'accident. On est ici dans un niveau 3 d'autonomie dans lequel le niveau d'automatisation est conditionnel. Plus particulièrement, les moyens d'interface 39 ont une composante visuelle et/ou une composante sonore pour informer le conducteur de la situation. La composante visuelle est réalisée à partir de **LED** installées à l'intérieur du véhicule. A titre d'illustration, si aucun risque n'est détecté, les **LED** sont de couleur bleue informant le conducteur que le mode automatique est activé. Lorsqu'un risque léger est détecté (circulation d'un autre véhicule en sens inverse proche du véhicule automobile 10, route étroite, etc...) les **LED** prennent une couleur orange. Le conducteur doit alors accroitre sa vigilance. Lorsqu'un risque important est détecté, les **LED** ont une couleur rouge et le conducteur est invité à prendre le contrôle du véhicule.

La figure 4, détaille les différents composants des moyens de détermination 37. Ces moyens de détermination 37 comprennent :
- des moyens de sélection 371 d'au moins un paramètre environnemental Pext_{j ;}
- des moyens de réception 372 d'un décalage latéral D_{L} ;
- des moyens de détermination 373 des caractéristiques de braquage ;
- des moyens de génération 374 des caractéristiques d'une réponse du véhicule automobile ;
- des moyens de génération 375 d'un modèle des moyens de direction ;
- un modèle du véhicule 376 ;
- des moyens de génération 377 de la commande K.

Les moyens de sélection 371 reçoivent l'ensemble des paramètres environnementaux Pextⱼ ainsi que le risque de collision Rⱼ associé à chacun de ces paramètres environnementaux. A partir de ces données, les moyens de sélection sont adaptés pour sélectionner le ou les paramètres environnementaux présentant des risques importants. Cette sélection de paramètre environnemental est transmise aux moyens de détermination 373 des caractéristiques de braquage ainsi qu'aux moyens de génération 374 des caractéristiques de la réponse du véhicule automobile.

Les moyens de réception 372 sont adaptés pour recevoir un décalage latéral D_{L} et le transmettre aux moyens de détermination 373 et aux moyens de génération 374.

Les moyens de détermination 373 sont adaptés pour déterminer un angle de braquage optimal θ et une vitesse angulaire de braquage optimale θ' à partir du risque de collision Rⱼ associé au paramètre environnemental Pextⱼ et du décalage latéral D_{L}. La détermination de l'angle de braquage θ et de la vitesse angulaire de braquage θ' tient également compte des capacités maximales des moyens de direction du véhicule automobile. Ces informations θ, θ' sont ensuite envoyées au modèle des moyens de direction 375.

Les moyens de génération 374 sont adaptés pour déterminer les caractéristiques de la réponse du véhicule automobile 10 en fonction du risque de collision Rⱼ associé au paramètre environnemental Pextⱼ et du décalage latéral D_{L}. Les caractéristiques de cette réponse concernent la vitesse de correction V_{c} du décalage latéral (lente ou rapide) ainsi que l'amortissement A_{c} de cette correction dans le temps (court ou long). Ainsi, si le risque de collision Rⱼ est faible et que le décalage latéral D_{L} est faible également, les caractéristiques de la réponse du véhicule automobile donneront une vitesse de correction lente avec un amortissement court. Un tel amortissement court permet un retour du véhicule automobile 10 sur la trajectoire prédéterminée T_{d} avec une oscillation faible en limitant les amplitudes de dépassement autour de cette trajectoire prédéterminée T_{d}

Les moyens de génération 375 sont adaptés pour générer un modèle M_{d} des moyens de direction à partir de l'angle de braquage optimal θ et de la vitesse de braquage optimale θ' transmis par les moyens de détermination 373. Dans un mode de réalisation particulier, ce modèle M_{d} des moyens de direction est un modèle Linéaire Invariant dans le Temps (LTI) de second ordre.

Le modèle du véhicule 376 est adapté pour fournir le comportement en lacet du véhicule, tel que l'angle de lacet et ses paramètres dérivés (vitesse angulaire de lacet, accélération de lacet). L'observation du comportement en lacet du véhicule automobile donne une information sur la qualité de guidage dudit véhicule automobile. Dans un mode de réalisation particulier, une vitesse angulaire de lacet V_{L} peut être déduite à partir de l'angle de braquage optimal θ et de la vitesse de braquage optimale θ'.

Les moyens de génération 377 génèrent la commande K à partir :
- de la vitesse de correction V_{c} du décalage latéral et de l'amortissement A_{c} de la correction dans le temps ;
- du modèle M_{d} des moyens de direction ;
- de la vitesse angulaire de lacet V_{L}.

La commande K est donc déterminée en partie selon ledit risque de collision Rⱼ via la vitesse de correction V_{c} et l'amortissement A_{c}. La commande K est également déterminée en partie selon le décalage latéral D_{L} via le modèle M_{d} des moyens de direction.

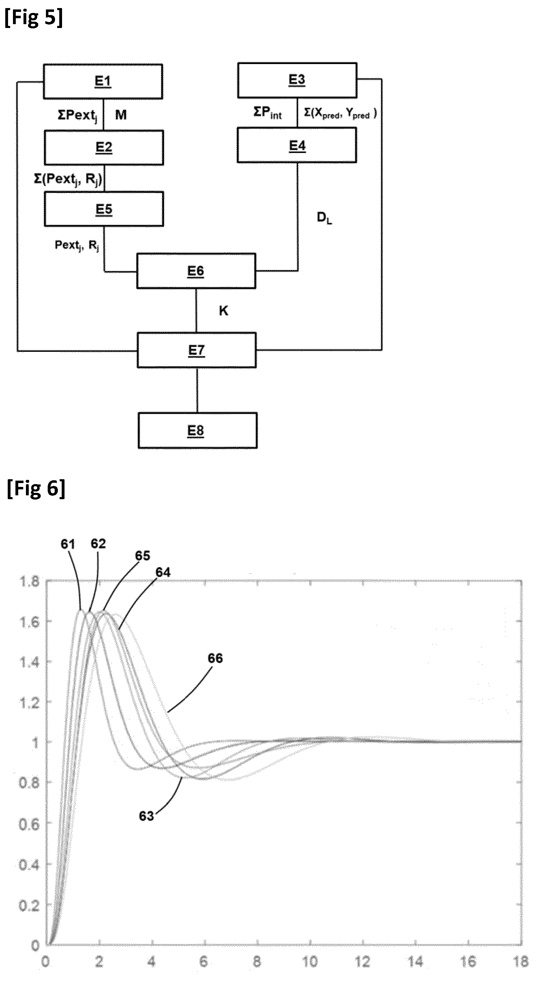

La figure 5 représente les différentes étapes d'une méthode de contrôle pour contrôler le mouvement latéral du véhicule automobile 10. Cette méthode de contrôle comprend une première étape E1 d'acquisition de paramètres externes au véhicule automobile. Ces paramètres externes comprennent des cartes numériques M et des paramètres environnementaux Pextⱼ. Les paramètres environnementaux Pextⱼ sont des paramètres sélectionnés dans la liste des paramètres suivants :
- un paramètre représentatif du trafic routier ;
- un paramètre représentatif d'un acteur mobile sur la route, tel qu'un être humain ou un animal ;
- un paramètre représentatif d'un obstacle immobile sur la route.

Dans une seconde étape E2, un risque de collision Rⱼ est déterminé pour chaque paramètre environnemental externe. En parallèle de la première étape E1 et de la seconde étape E2, la méthode de contrôle comprend une troisième étape E3 d'acquisition de paramètres internes au véhicule automobile. A partir de ces paramètres internes il est possible de déduire dans une quatrième étape E4, un décalage latéral D_{L} du véhicule automobile par rapport à une trajectoire prédéterminée Tₚ. Dans une cinquième étape E5, au moins un paramètre environnemental externe Pextⱼ est sélectionné. Cette sélection est fonction du risque de collision Rⱼ associé audit paramètre environnemental Pextⱼ. Typiquement, dans la cinquième étape E5 on vient sélectionner le paramètre environnemental qui présente un risque de collision le plus élevé avec le véhicule automobile 10. Ce paramètre environnemental est par exemple lié à un autre véhicule automobile présent sur la voie opposée de la route et qui roule en sens inverse par rapport audit véhicule automobile 10.

La sixième étape E6 concerne une étape de détermination d'une commande K pour la commande des moyens de direction du véhicule automobile. Cette commande K des moyens de direction est déterminée selon le risque de collision Rⱼ du paramètre environnemental sélectionné Pextⱼ et selon le décalage latéral D_{L} du véhicule automobile 10.

Dans une septième étape E7, des moyens de direction modifient la direction du véhicule automobile 10 en fonction de la commande K, de manière à corriger le décalage latéral D_{L}. La vitesse de correction du décalage latéral D_{L} est adaptée en fonction du risque de collision Rⱼ et de l'importance dudit décalage latéral D_{L}. Ainsi, la correction du décalage latéral D_{L} est ralentie si le risque de collision Rⱼ est faible au regard du décalage latéral D_{L} du véhicule automobile. De la même manière, la correction du décalage latéral D_{L} est accélérée si le risque de collision Rⱼ est élevé au regard du décalage latéral D_{L} dudit véhicule automobile 10. En outre, un amortissement A_{c} de la correction du décalage latéral D_{L} est réalisé en fonction du risque de collision Rⱼ et de l'importance de ce décalage latéral D_{L}. On essaye ainsi de limiter les phénomènes d'oscillation de la trajectoire réelle Tᵣ du véhicule automobile autour de la trajectoire prédéterminée Tₚ.

Dans une huitième étape E8, la méthode de contrôle comprend une étape d'information dans le véhicule automobile. Cette information visuelle et/ou sonore est à destination du conducteur. Elle permet d'informer ledit conducteur d'une situation de roulage du véhicule automobile. Par exemple, cette information visuelle et/ou sonore peut inciter le conducteur à reprendre le contrôle des moyens de direction du véhicule automobile, en cas de danger.

On notera que le cycle des étapes E1 à E7 se déroule à une fréquence déterminée de l'ordre de 0,01 secondes. Cette fréquence est suffisamment courte pour permettre une grande réactivité du véhicule automobile 10, notamment vis-à-vis des évolutions des paramètres environnementaux et de leur risque associé.

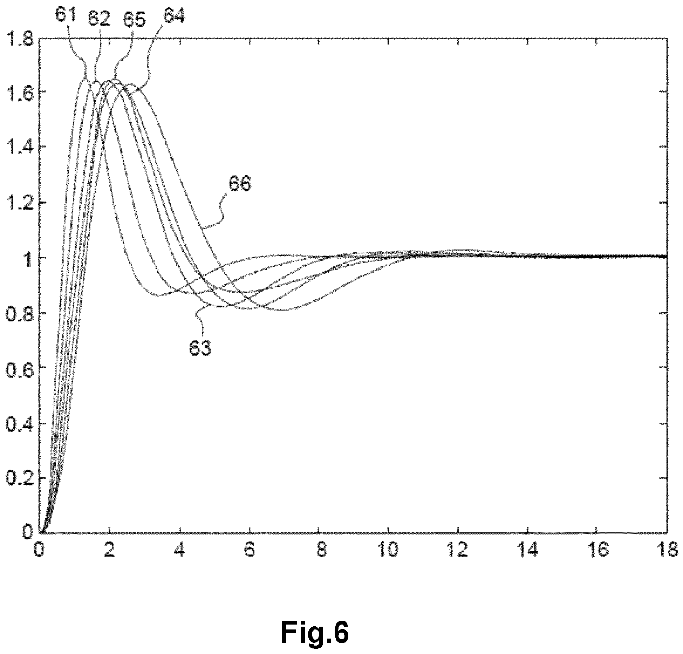

La figure 6 illustre des réponses du véhicule automobile 10 selon différentes distance latérales D_{L} mesurées par rapport à la trajectoire prédéterminée Tₚ. Ainsi la courbe 61 illustre la réponse du véhicule automobile 10 lorsque la distance latérale D_{L} est de 5 cm. La courbe 62 illustre la réponse pour une distance latérale D_{L} de 10 cm. La courbe 63 illustre la réponse pour une distance latérale D_{L} de 15 cm. La courbe 64 illustre la réponse pour une distance latérale D_{L} de 20 cm. La courbe 65 illustre la réponse pour une distance latérale D_{L} de 25 cm. La courbe 66 illustre la réponse pour une distance latérale D_{L} de 30 cm. L'abscisse de ces courbes représente un temps en seconde et l'ordonnée représente une amplitude de réponse. A partir de ces différentes courbes, on constate que plus la distance latérale D_{L} est élevée, plus la réponse du véhicule automobile 10 pour revenir à la trajectoire prédéterminée est lente. Cette réponse est ainsi plus naturelle et plus confortable pour les passagers. Cette stratégie de réponse est particulièrement adaptée lorsque le trafic venant en sens inverse est nul. Dans le cas où le trafic venant en sens inverse est important, la réponse du véhicule automobile 10 peut-être plus rapide, notamment dans le cas particulier où le véhicule automobile à tendance à dériver vers les bandes centrales de la route. Dans ce cas particulier, l'amortissement de la correction peut être plus long que pour les figures 61 à 66 avec une oscillation plus marquée autour de la trajectoire prédéterminée Tₚ.

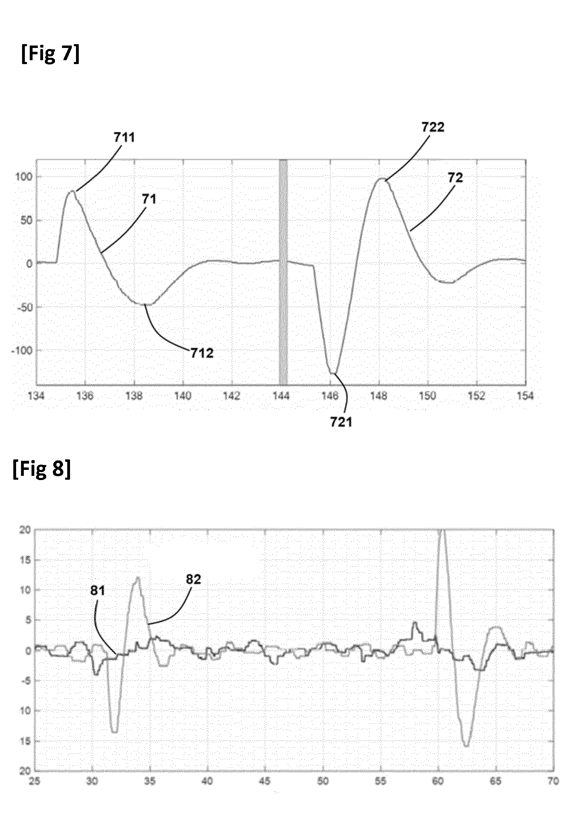

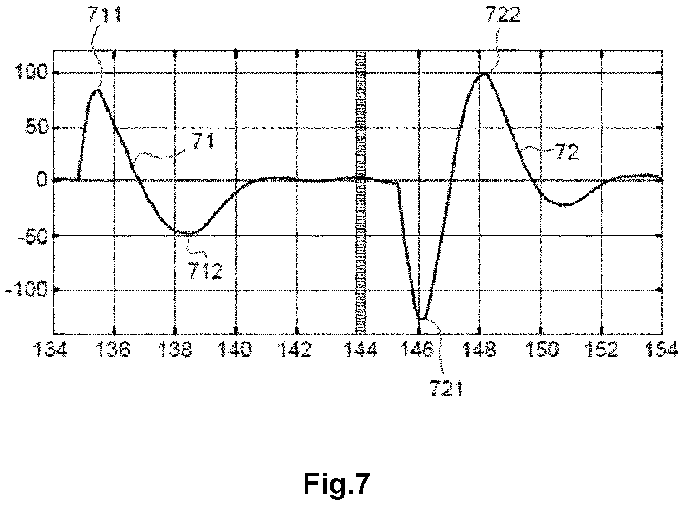

La méthode de contrôle et le système de contrôle 30 associés ont été validés sur un circuit d'essai dans une partie mixte comportant des lignes droites et des courbes. Un premier test a été effectué pour comparer le système de contrôle 30 de l'invention avec un système de contrôle classique qui ne tient pas compte des paramètres environnementaux. Les figures 7 à 9 illustrent les résultats de ces tests. Plus particulièrement, la figure 7 compare l'évolution dans le temps d'un angle de braquage appliqué par le système de contrôle 30 (courbe 71) et l'évolution dans le temps d'un angle de braquage θ appliqué par le système de contrôle classique (courbe 72). Sur la courbe 71, à la seconde 134, le véhicule automobile est piloté pour un changement de voie, par exemple, pour effectuer un dépassement d'un autre véhicule. Le système de contrôle 30 va alors déclencher un brusque changement de l'angle de braquage pour enclencher ce dépassement. Ce brusque changement génère, à la seconde 135, un premier pic 711 avec une valeur d'angle de braquage θ autour de 90° en valeur absolue. Le véhicule automobile est ensuite redirigé vers la trajectoire prédéterminée par un autre changement de l'angle de braque générant un second pic 712 à la seconde 139. Ce second pic 712 a une valeur d'angle de braquage θ plus faible, autour de 50° en valeur absolue. Puis l'angle de braquage se stabilise autour de 0°, le véhicule roulant de nouveau selon la trajectoire prédéterminée. La courbe 72 reflète l'évolution dans le temps d'un angle de braquage θ appliqué par le système de contrôle classique lors d'un dépassement équivalent à celui de la courbe 71. Cette courbure 62 comporte un premier pic 721 supérieur à 100° comme angle de braquage et un second pic 722 autour de 100° également. Les valeurs d'angle de braquage des pics de la courbe 72 sont bien supérieures à celles des pics de la courbe 71. De la même manière, l'amplitude entre le premier pic 721 et le second pic 722 est supérieur à l'amplitude entre le premier pic 711 et le second pic 712 de la courbe 71. Ainsi, le système de contrôle 30 permet de limiter les grands coups de volant, rendant la conduite du véhicule automobile plus confortable pour les passagers. En outre, le système de contrôle 30 assure une stabilisation plus rapide du véhicule automobile sur la trajectoire prédéterminée Tₚ.

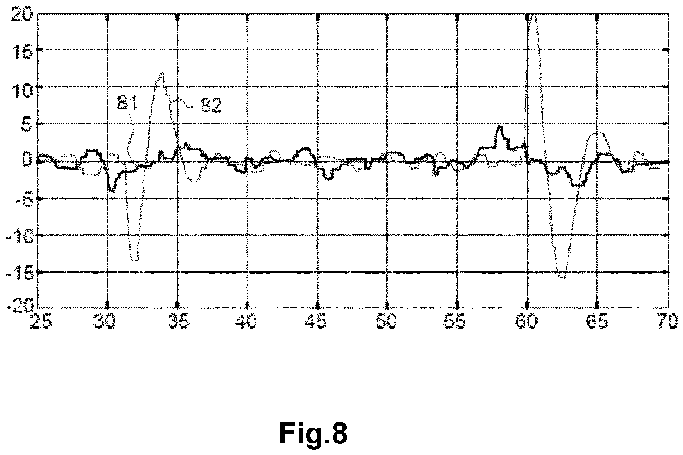

La figure 8 compare les évolutions d'angle de braquage lorsque celui est piloté par le système de contrôle 30 (courbe 81) d'une part et lorsque celui-ci est piloté par un système de contrôle classique (courbe 82) d'autre part. Ces courbes 81 et 82 sont soumises à une première sollicitation à 32 secondes et à une seconde sollication à 62 secondes. On constate de nouveau que la courbe 81 associée au système de contrôle 30 ne surréagit pas aux sollicitations, contrairement à la courbe 82 du système de contrôle classique qui présente de grandes amplitudes. En effet, le système de contrôle 30 intègre dans sa prise de décision le risque de collision. Dès lors que ce risque est faible voire inexistant, la correction du décalage latéral du véhicule automobile peut se faire de manière assez souple. La courbe 81 présente ainsi une évolution quasi-stable avec une amplitude limitée autour de la valeur 0.

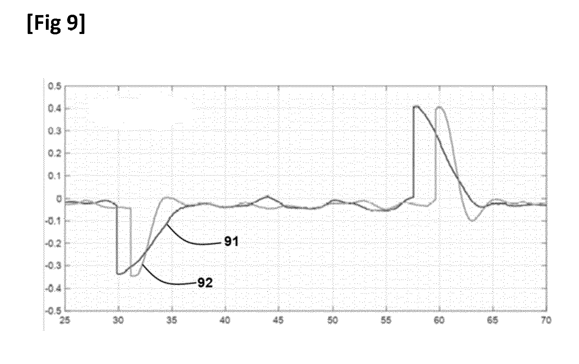

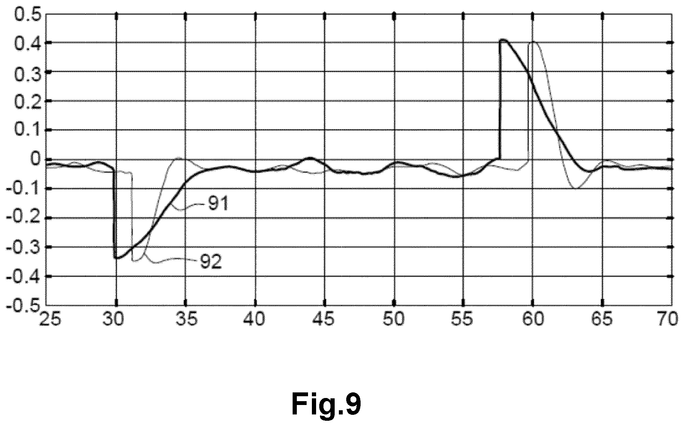

La figure 9 illustre le cas où le risque de collision est élevé pour au moins un paramètre environnemental externe. Cette figure 9 représente les variations d'un décalage latéral D_{L} en fonction du temps pour le système de contrôle 30 (courbe 91) et pour le système de contrôle classique (courbe 92). La courbe 91 du système de contrôle 30 a ici globalement la même amplitude que la courbe 92 du système de contrôle classique. On constate cependant que le retour à la valeur nulle est plus lent pour la courbe 91 que pour la courbe 92. La correction du décalage latéral du véhicule automobile se fait ainsi avec une plus grande souplesse par le système de contrôle 30.

La méthode de contrôle pour contrôler le mouvement latéral du véhicule automobile et le système de contrôle 30 associé permettent ainsi :
- d'adapter en temps réel la réponse du véhicule automobile 10 à son environnement ;
- d'avoir une réponse qui tienne compte à la fois de paramètres internes au véhicule automobile 10 et de paramètres environnementaux externes audit véhicule automobile 10;
- d'apporter un grand confort et une grande sécurité aux passagers du véhicule automobile 10;
- d'apporter rapidement une information au conducteur sur la nécessité ou non de reprendre le contrôle des moyens de direction du véhicule automobile 10, notamment en cas de danger.

L'invention concerne également un produit programme d'ordinateur comportant des instructions de programme exploitables par le système de contrôle 30, qui lorsqu'elles sont exécutées ou interprétées par ledit système de contrôle 30 déclenchent la mise en œuvre de la méthode de contrôle telle que décrite à la figure 5.

L'invention concerne également un véhicule automobile 10 comprenant le système de contrôle 30. Ce véhicule automobile est un véhicule de tourisme, comme il est représenté sur la figure 1 et la figure 2. En variante, le véhicule automobile est un tout autre véhicule tel qu'un bus ou un camion.

L'invention n'est pas limitée aux modes de réalisation et variantes présentées et d'autres modes de réalisation et variantes apparaîtront clairement à l'homme du métier selon les revendications annexées.

## Revendications

1. Méthode de contrôle pour contrôler le mouvement latéral d'un véhicule automobile (10), le véhicule automobile (10) comprenant des moyens de direction pour suivre une trajectoire prédéterminée (Tₚ) sur une route (20), lesdits moyens de direction étant adaptés pour modifier (E7) la direction dudit véhicule automobile (10), ladite méthode comprenant :
- une étape de détermination (E4) d'un décalage latéral (D_{L}) dudit véhicule automobile (10) par rapport à ladite trajectoire prédéterminée (Tₚ) ;
- une étape de détermination (E6) d'une commande (K) pour la commande des moyens de direction du véhicule automobile (10) apte à corriger le décalage latéral (D_{L}) ;
la méthode de contrôle comprenant :
- une étape de sélection (E5) d'au moins un paramètre environnemental (Pextⱼ) externe au véhicule automobile (10), ladite sélection dudit paramètre environnemental (Pextⱼ) étant fonction d'un risque de collision (Rⱼ) avec ledit véhicule automobile (10), la commande (K) des moyens de direction étant déterminée selon ledit risque de collision (Rⱼ) et selon ledit décalage latéral (D_{L}) du véhicule automobile (10),
la méthode étant **caractérisée en ce que** la vitesse de correction du décalage latéral (D_{L}) est adaptée en fonction dudit risque de collision (Rⱼ) et dudit décalage latéral (D_{L}).

2. Méthode de contrôle selon la revendication 1, dans laquelle le paramètre environnemental est au moins un paramètre sélectionné dans la liste des paramètres suivants :
- un paramètre représentatif du trafic routier ;
- un paramètre représentatif d'un acteur mobile sur la route, tel qu'un être humain ou un animal ;
- un paramètre représentatif d'un obstacle immobile sur la route.

3. Méthode de contrôle selon la revendication 1, dans laquelle la correction du décalage latéral (D_{L}) est ralentie si le risque de collision (Rⱼ) est faible au regard du décalage latéral (D_{L}) dudit véhicule automobile.

4. Méthode de contrôle selon l'une quelconque des revendications 1 ou 3, dans laquelle la correction du décalage latéral (D_{L}) est accélérée si le risque de collision (Rⱼ) est élevé au regard du décalage latéral (D_{L}) dudit véhicule automobile.

5. Méthode de contrôle selon l'une quelconque des revendications 1 à 4, dans laquelle un amortissement (A_{c}) de la correction du décalage latéral (D_{L}) est réalisé en fonction dudit risque de collision (Rⱼ) et dudit décalage latéral (D_{L}).

6. Méthode de contrôle selon l'une quelconque des revendications 1 à 5, dans laquelle ladite méthode comprend une étape d'information (E8) dans le véhicule automobile (10), ladite information concernant une situation de roulage dudit véhicule automobile (10).

7. Système de contrôle pour contrôler le mouvement latéral d'un véhicule automobile (10), le véhicule (10) comprenant des moyens de direction pour suivre une trajectoire prédéterminée (Tₚ) sur une route (20), lesdits moyens de direction étant adaptés pour modifier la direction dudit véhicule automobile (10), ledit système comprenant :
- des moyens de détermination (36) d'un décalage latéral (D_{L}) dudit véhicule automobile (10) par rapport à ladite trajectoire prédéterminée (Tₚ) ;
- des moyens de détermination (37) d'une commande (K) pour la commande des moyens de direction du véhicule automobile (10) apte à corriger ledit décalage latéral (D_{L}) ;
- des moyens de sélection (371) d'au moins un paramètre environnemental externe (Pextⱼ) au véhicule automobile (10), ladite sélection dudit paramètre environnemental (Pextⱼ) étant fonction d'un risque de collision (Rⱼ) avec ledit véhicule automobile (10), la commande (K) des moyens de direction étant déterminée selon ledit risque de collision (Rⱼ) et selon ledit décalage latéral (D_{L}) du véhicule automobile (10), un amortissement (Ac) de la correction du décalage latéral (DL) étant réalisé en fonction dudit risque de collision (Rj) et dudit décalage latéral (DL).

8. Système de contrôle selon la revendication 7, dans lequel ledit système (30) comprend des moyens d'interface Homme-Machine (39) pour informer un passager d'une situation de roulage dudit véhicule automobile (10).

9. Produit programme d'ordinateur comportant des instructions de programme exploitables par le système de contrôle (30) des revendications 7 ou 8, qui lorsqu'elles sont exécutées ou interprétées par ledit système de contrôle (30) déclenchent la mise en œuvre de la méthode de contrôle selon l'une quelconque des revendications 1 à 6 dans un véhicule automobile (10).

10. Véhicule automobile autonome comportant un système de contrôle (30) selon l'une quelconque des revendications 7 ou 8.

## Patentansprüche

1. Steuerungsverfahren zum Steuern der seitlichen Bewegung eines Kraftfahrzeugs (10), wobei das Kraftfahrzeug (10) Richtungsmittel zum Verfolgen einer vorbestimmten Trajektorie (Tₚ) auf einer Strecke (20) beinhaltet, wobei die Richtungsmittel dazu angepasst sind, die Richtung des Kraftfahrzeugs (10) zu ändern (E7), wobei das Verfahren Folgendes beinhaltet:
- einen Schritt des Bestimmens (E4) eines seitlichen Versatzes (D_{L}) des Kraftfahrzeugs (10) in Bezug auf die vorbestimmte Trajektorie (Tₚ);
- einen Schritt des Bestimmens (E6) einer Ansteuerung (K) zum Ansteuern der Richtungsmittel des Kraftfahrzeugs (10), die dazu fähig ist, den seitlichen Versatz (D_{L}) zu korrigieren;
wobei das Steuerungsverfahren Folgendes beinhaltet:
- einen Schritt des Auswählens (E5) mindestens eines Umgebungsparameters (Pextⱼ) außerhalb des Kraftfahrzeugs (10), wobei das Auswählen des Umgebungsparameters (Pextⱼ) von einem Risiko einer Kollision (Rⱼ) mit dem Kraftfahrzeug (10) abhängt, wobei die Ansteuerung (K) der Richtungsmittel gemäß dem Kollisionsrisiko (Rⱼ) und gemäß dem seitlichen Versatz (D_{L}) des Kraftfahrzeugs (10) bestimmt wird,
wobei das Verfahren **dadurch gekennzeichnet ist, dass** die Geschwindigkeit der Korrektur des seitlichen Versatzes (D_{L}) in Abhängigkeit von dem Kollisionsrisiko (Rⱼ) und dem seitlichen Versatz (D_{L}) angepasst wird.

2. Steuerungsverfahren nach Anspruch 1, wobei der Umgebungsparameter mindestens ein aus der Liste der folgenden Parameter ausgewählter Parameter ist:
- ein für den Straßenverkehr repräsentativer Parameter;
- ein für einen beweglichen Akteur auf der Strecke, wie etwa einen Menschen oder ein Tier, repräsentativer Parameter;
- ein für ein unbewegliches Hindernis auf der Strecke repräsentativer Parameter.

3. Steuerungsverfahren nach Anspruch 1, wobei die Korrektur des seitlichen Versatzes (D_{L}) verlangsamt wird, wenn das Kollisionsrisiko (Rⱼ) im Hinblick auf den seitlichen Versatz (D_{L}) des Kraftfahrzeugs gering ist.

4. Steuerungsverfahren nach einem der Ansprüche 1 oder 3, wobei die Korrektur des seitlichen Versatzes (D_{L}) beschleunigt wird, wenn das Kollisionsrisiko (Rⱼ) im Hinblick auf den seitlichen Versatz (D_{L}) des Kraftfahrzeugs hoch ist.

5. Steuerungsverfahren nach einem der Ansprüche 1 bis 4, wobei eine Dämpfung (A_{c}) der Korrektur des seitlichen Versatzes (D_{L}) in Abhängigkeit von dem Kollisionsrisiko (Rⱼ) und dem seitlichen Versatz (D_{L}) durchgeführt wird.

6. Steuerungsverfahren nach einem der Ansprüche 1 bis 5, wobei das Verfahren einen Informationsschritt (E8) in dem Kraftfahrzeug (10) beinhaltet, wobei die Information eine Fahrsituation des Kraftfahrzeugs (10) betrifft.

7. Steuerungssystem zum Steuern der seitlichen Bewegung eines Kraftfahrzeugs (10), wobei das Fahrzeug (10) Richtungsmittel zum Verfolgen einer vorbestimmten Trajektorie (Tₚ) auf einer Strecke (20) beinhaltet, wobei die Richtungsmittel dazu angepasst sind, die Richtung des Kraftfahrzeugs (10) zu ändern, wobei das System Folgendes beinhaltet:
- Mittel zum Bestimmen (36) eines seitlichen Versatzes (D_{L}) des Kraftfahrzeugs (10) in Bezug auf die vorbestimmte Trajektorie (Tₚ);
- Mittel zum Bestimmen (37) einer Ansteuerung (K) zum Ansteuern der Richtungsmittel des Kraftfahrzeugs (10), die dazu fähig ist, den seitlichen Versatz (D_{L}) zu korrigieren;
- Mittel zum Auswählen (371) mindestens eines Umgebungsparameters (Pextⱼ) außerhalb des Kraftfahrzeugs (10), wobei das Auswählen des Umgebungsparameters (Pextⱼ) von einem Risiko einer Kollision (Rⱼ) mit dem Kraftfahrzeug (10) abhängt, wobei die Ansteuerung (K) der Richtungsmittel gemäß dem Kollisionsrisiko (Rⱼ) und gemäß dem seitlichen Versatz (D_{L}) des Kraftfahrzeugs (10) bestimmt wird, wobei eine Dämpfung (Ac) der Korrektur des seitlichen Versatzes (DL) in Abhängigkeit von dem Kollisionsrisiko (Rj) und dem seitlichen Versatz (DL) durchgeführt wird.

8. Steuerungssystem nach Anspruch 7, wobei das System (30) Mensch-Maschine-Schnittstellenmittel (39) beinhaltet, um einen Mitfahrer über eine Fahrsituation des Kraftfahrzeugs (10) zu informieren.

9. Computerprogrammprodukt, das Programmanweisungen, die durch das Steuerungssystem (30) nach den Ansprüchen 7 oder 8 verarbeitet werden können, umfasst, die, wenn sie durch das Steuerungssystem (30) ausgeführt oder interpretiert werden, die Umsetzung des Steuerungsverfahrens nach einem der Ansprüche 1 bis 6 in einem Kraftfahrzeug (10) auslösen.

10. Autonomes Kraftfahrzeug, das ein Steuerungssystem (30) nach einem der Ansprüche 7 oder 8 umfasst.

## Claims

1. Control method for controlling the lateral movement of a motor vehicle (10), the motor vehicle (10) comprising steering means in order to follow a predetermined trajectory (Tₚ) on a road (20), said steering means being capable of changing (E7) the direction of said motor vehicle (10), said method comprising:
- a step (E4) of determining a lateral offset (D_{L}) of said motor vehicle (10) relative to said predetermined trajectory (Tₚ);
- a step (E6) of determining a command (K) for controlling the steering means of the motor vehicle (10) suitable for correcting the lateral offset (D_{L});
the control method comprising:
- a step (E5) of selecting at least one environmental parameter (Pextⱼ) external to the motor vehicle (10), said selection of said environmental parameter (Pextⱼ) being a function of a risk of collision (Rⱼ) with said motor vehicle (10), the command (K) for the steering means being determined according to said collision risk (Rⱼ) and according to said lateral offset (D_{L}) of the motor vehicle (10),
the method being **characterized in that** the speed of correction of the lateral offset (D_{L}) is adjusted as a function of said collision risk (Rⱼ) and said lateral offset (D_{L})

2. Control method according to Claim 1, in which the environmental parameter is at least one parameter selected from the following list of parameters:
- a parameter representing the road traffic;
- a parameter representing a mobile actor on the road, such as a human being or an animal;
- a parameter representing an immobile obstacle on the road.

3. Control method according to Claim 1, in which the correction of the lateral offset (D_{L}) is slowed down if the collision risk (Rⱼ) is low in light of the lateral offset (D_{L}) of said motor vehicle.

4. Control method according to either one of Claims 1 and 3, in which the correction of the lateral offset (D_{L}) is accelerated if the collision risk (Rⱼ) is high in light of the lateral offset (D_{L}) of said motor vehicle.

5. Control method according to any one of Claims 1 to 4, in which the correction of the lateral offset (D_{L}) is damped (A_{c}) as a function of said collision risk (Rⱼ) and said lateral offset (D_{L}).

6. Control method according to any one of Claims 1 to 5, in which said method comprises a step (E8) of providing information in the motor vehicle (10), said information relating to a travelling situation of said motor vehicle (10).

7. Control system for controlling the lateral movement of a motor vehicle (10), the vehicle (10) comprising steering means in order to follow a predetermined trajectory (Tₚ) on a road (20), said steering means being capable of changing the direction of said motor vehicle (10), said system comprising:
- means (36) for determining a lateral offset (D_{L}) of said motor vehicle (10) relative to said predetermined trajectory (Tₚ);
- means (37) for determining a command (K) for controlling the steering means of the motor vehicle (10) suitable for correcting said lateral offset (D_{L});
- means (371) for selecting at least one environmental parameter (Pextⱼ) external to the motor vehicle (10), said selection of said environmental parameter (Pextⱼ) being a function of a risk of collision (Rⱼ) with said motor vehicle (10), the command (K) for the steering means being determined according to said collision risk (Rⱼ) and according to said lateral offset (D_{L}) of the motor vehicle (10), the correction of the lateral offset (D_{L}) being damped (A_{c}) as a function of said collision risk (Rⱼ) and said lateral offset (D_{L}).

8. Control system according to Claim 7, in which said system (30) comprises human-machine interface means (39) for informing a passenger of a travelling situation of said motor vehicle (10).

9. Computer program product comprising program instructions that can be used by the control system (30) according to Claims 7 or 8 which, when they are executed or interpreted by said control system (30), trigger the implementation of the control method according to any one of Claims 1 to 6 in a motor vehicle (10).

10. Autonomous motor vehicle comprising a control system (30) according to either one of Claims 7 and 8.
